# EUROPEAN PATENT APPLICATION

(11) **EP 1 044 902 A2**
(43) Date of publication of application: **18.10.2000**
(21) Application number: 00303176.2
(22) Date of filing: 14.04.2000
(51) Int. Cl.: B65G 45/12

(54) **Fluted scraper for conveyor belt cleaners**

(30) Priority: 15.04.1999 US 129444 P
(71) Applicant: Martin Engineering Company, Neponset, Illinois 61345-9766 (US)
(72) Inventor: Veenhof, Willem D., Brevard NC 28712 (SA)
(74) Representative: Goodenough, Nigel

(57) **Abstract**

A scraper blade (20) for a conveyor belt (24) cleaner including a scraping tip (44) attached to a mounting base (28). The scraping tip includes a fluted front scraping surface (45) adapted to face toward the oncoming conveyor belt and any conveyed material adhering thereto. The fluted scraping surface (46) includes a plurality of elongate ridges (62A-C) and a plurality of elongate valleys which form a serrated scraping edge (56).

## Description

The present invention is directed to a scraper blade for use in a conveyor belt cleaner, and in particular to a scraper blade having a fluted scraping surface and a serrated scraping edge for scraping adherent material from the surface of a rotating conveyor belt.

Conveyor belt cleaners include one or more scraper blades that are placed in scraping engagement with the outer surface of a rotating conveyor belt to scrape conveyed material that remains adhered to the belt after the discharge of the remainder of the conveyed material from the conveyor belt. In some cases the scraper blade is a single unit that extends transversely to the conveyor belt across approximately the entire width of the belt. In other cases a series of scraper blades are either located in line with one another, or are staggered with respect to one another, to extend across the width of the belt. The scraping surface of a scraper blade may be located perpendicular to the surface of the conveyor belt, or the scraping surface may form an acute angle or an obtuse angle with respect to the surface of the conveyor belt. The scraping surface of the scraper blade is normally oriented transversely to the direction of conveyor belt travel. The scraper blades may be placed in contact with a curved portion of the conveyor belt, such as where the belt is wrapped around a discharge pulley, when the scraper blades are used in a primary conveyor belt cleaner, or the scraper blades may be placed in engagement with the surface of the conveyor belt at a position located on the return run of the conveyor belt that is relatively planar when the scraper blades are used in a secondary conveyor belt cleaner.

Previous scraper blades included a generally planar scraping surface as a planar scraping surface forms a linear scraping edge. Use of a linear scraping edge is the simplest way to obtain the most efficient mating of the scraper blade to the surface of the belt. Scraper blades are resiliently biased against the surface of the conveyor belt in order to avoid damage to the scraper blade and conveyor belt cleaner when obstructions, such as conveyor belt splices, are encountered, and to maintain the scraper blades in biased scraping engagement with the belt as the scraper blades wear. Any deviation from a transverse linear line of contact between the scraper blade and the surface of conveyor belt presents difficulties in obtaining and maintaining uniform mating of the scraper blade to the belt surface.

A transverse linear line of contact as provided by a linear scraping edge of a scraper blade causes a planing effect between the scraper blade and the surface of the conveyor belt, which becomes greater as the viscosity, adhesion, velocity and mass of the adherent conveyed material increases. The elimination of planing requires an undesirable increase in the contact pressure of the scraper blade against the conveyor belt, and a corresponding decrease in the resilience of the scraper blade, which reduces the ability of the scraper blade to absorb impact forces created by passing obstructions.

In U.S. Patent No. 4,349,098 a large number of round scraper blades are placed in a redundant overlapping configuration. This configuration is effective in overcoming planing forces. However, even at an extremely low contact pressure against the belt, this configuration was too aggressive and caused damage to the conveyor belt. The present invention provides reduced contact pressure between the scraper blade and the belt while eliminating planing, and while maintaining a generally smooth and generally planar surface in contact against the surface of the conveyor belt to minimize abrasive scuffing to the surface of the conveyor belt.

It is also well known in the art that a scraper blade which forms an acute angle with the oncoming conveyor belt surface is better able to deal with obstructions, such as mechanical belt splices, than a scraper blade that is orientated at an obtuse angle to the belt, as a scraper blade located at an acute angle provides a ramp which engages the obstruction and facilitates pivoting of the scraper blade away from the obstruction.

A scraper blade according to the preferred embodiment of the present invention has a fluted scraping surface adapted to face toward an oncoming conveyor belt and any conveyed material adhering thereto. The scraper blade includes one or more generally planar engagement surfaces adjacent to the fluted scraping surface which are generally coplanar with one another and which are adapted to face toward and engage the outer surface of the conveyor belt during operation. The flutes, and the ridges and valleys formed by the flutes, may be generally flat-sided, rounded or curved. The depth of each flute increases as the flute extends away from the engagement surfaces. The height of each ridge formed by a flute increases as the ridge extends outwardly from the engagement surfaces and the depth of each valley formed by a flute increases as the valley extends outwardly from the engagement surfaces.

The invention will be better understood from the following description of preferred embodiments thereof, given by way of example only, reference being had to the accompanying drawings wherein:

Figure 1 is a perspective view of the scraper blade of the present invention adapted for use at an acute angle in a secondary type conveyor belt cleaner.

Figure 2 is a modified embodiment of the scraper blade of the present invention adapted for use at an obtuse angle in a primary type conveyor belt cleaner.

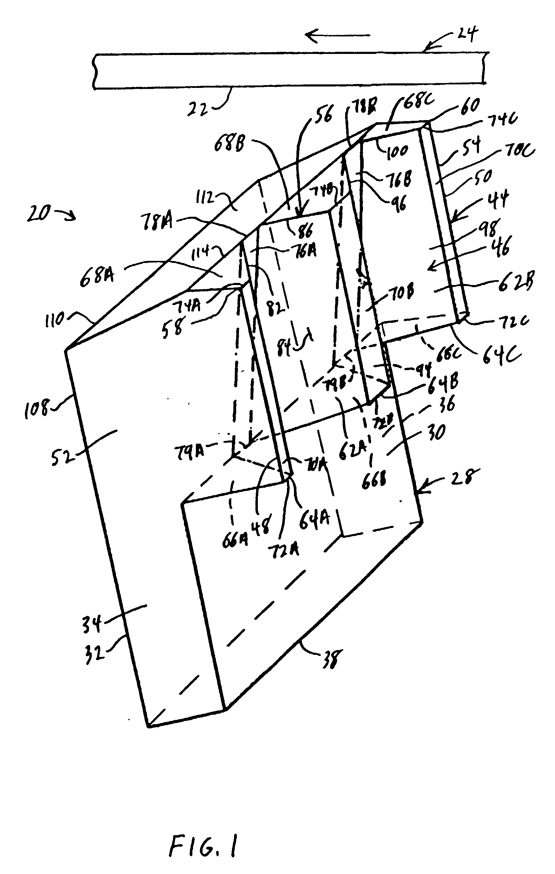

One embodiment of the scraper blade of the present invention is shown in Figure 1 and is designated with the reference number 20. The scraper blade 20 is adapted to be removably attached to a selectively movable cross shaft of a secondary type conveyor belt cleaner (not shown) for cleaning adherent material from the generally planar outer surface 22 of a rotating conveyor belt 24. As shown in Figure 1, the conveyor belt 24 is moving from right to left as indicated by the arrow.

The scraper blade 20 includes a generally rectangular mounting base 28 that is adapted to be removably attached to the cross shaft of the conveyor belt cleaner in one of a number of ways which are well known in the art. The mounting base 28 includes a generally planar front wall 30, a spaced apart and generally parallel planar rear wall 32. A generally planar first side wall 34 extends between a first side edge of the front wall 30 and a first side edge of the rear wall 32, and a generally planar second side wall 36 extends between a second side edge of the front wall 30 and a second side edge of the rear wall 32. The second side wall 36 is spaced apart from and generally parallel to the first side wall 34. The mounting base 28 also includes a generally planar bottom wall 38 that extends between the bottom edges of the front wall 30, rear wall 32 and first and second side walls 34 and 36. The mounting base 28 may include one or more bores to facilitate the mounting of the mounting base 28 to the cross shaft of the conveyor belt cleaner.

The scraper blade 20 also includes a scraping tip 44 attached to and extending outwardly from the top end of the mounting base 28. The scraping tip 44 includes a front scraping surface 46 that is adapted to engage the adherent material on the outer surface 22 of the conveyor belt 24. The front scraping surface 46 extends transversely from a generally linear first side edge 48 to a generally parallel linear second side edge 50. The first side edge 48 of the front scraping surface 46 is located at a generally planar first end wall 52 that is coplanar with and that extends from the first side wall 34. The second side edge 50 is located at a generally planar second end wall 54 that is coplanar with and that extends from the second side wall 36. The front scraping surface 46 extends upwardly from a location at the bottom end of the scraping tip 94 adjacent the mounting base 28, to a scraping edge 56 at the top end of the scraping tip 44. The scraping edge 56 extends from a first end 58 located at the first side edge 48 to a second end 60 located at the second side edge 50 of the front scraping surface 46. The scraping edge 56 extends nonlinearly between the ends 58 and 60, that is it does not form a single straight line between the ends 58 and 60. Although the scraping edge 56 is nonlinear, it may include one or more generally linear segments. The scraping edge 58 preferably has a serrated configuration including one or more ridges and one or more valleys. The serrated configuration of the scraping edge 56 may comprise various different configurations including a polygonal configuration including a plurality of linear segments arranged end to end in a non-linear manner, a sinusoidal wave configuration, a square wave configuration, or a combination thereof.

The front scraping surface 46 includes one or more elongate grooves or flutes 62A-B that extend from the bottom end of the scraping tip 44 adjacent the mounting base 28 to the serrated scraping edge 56. The flutes 62A-B form a plurality of elongate teeth or ridges 64A-C that extend generally linearly from a position at the bottom end of the scraping tip 44 adjacent the mounting base 28 to the serrated scraping edge 56, and that project outwardly and forwardly from a plane in which the front wall 30 of the mounting base 28 is located. Each flute 62A-B forms a valley that is located between adjacent pairs of ridges 64A-C. The front surface 46 thereby has a generally corrugated configuration including alternating ridges and valleys. The corrugated configuration of the front surface 46 may comprise various different configurations including a polygonal configuration including a plurality of generally planar segments arranged in a nonplanar manner, a sinusoidal wave configuration, a square wave configuration, or a combination thereof.

The ridge 64A includes a generally planar bottom end wall 66A that is located generally perpendicular to the front wall 30 of the mounting base 28 and a generally planar top end wall 68A that is spaced apart from and generally parallel to the bottom end wall 66A. The top end wall 68A forms a portion of the serrated scraping edge 56. The ridge 64B includes a generally planar bottom end wall 66B that extends outwardly and generally perpendicular to the front wall 30 and a generally planar top end wall 68B that is generally parallel to the bottom end wall 66B. The top end wall 68B forms a portion of the serrated scraping edge 56. The ridge 64C includes a generally planar bottom end wall 66C that extends outwardly from and generally perpendicular to the front wall 30 of the mounting base 28, and a generally planar top end wall 68C that is generally parallel to the bottom end wall 66C. The top end wall 68C forms a portion of the serrated scraping edge 56. The bottom end walls 66A, B and C are all generally coplanar with one another. The top end walls 68A, B and C are also all generally coplanar with one another.

The ridge 64A includes an apex formed by a generally planar and rectangular front wall 70A that has a linear bottom edge 72A at the bottom surface 66A and a linear top edge 74A at the top end wall 68A. The top edge 74A of the front wall 70 forms a portion of the serrated scraping edge 56. The ridge 64B includes an apex formed by a generally planar and rectangular front wall 70B that extends from a linear bottom edge 72B at the bottom end wall 66B to a linear top edge 74B at the top end wall 68B. The top edge 74B of the front wall 70B forms a portion of the serrated scraping edge 56. The ridge 64C includes an apex formed by a generally planar and rectangular front wall 70C that extends from a linear bottom edge 72C at the bottom end wall 66C to a linear top edge 74C at the top end wall 68C. The top edge 74C of the front wall 70C forms a portion of the serrated scraping edge 56. The front walls 70A, B and C are all generally coplanar and parallel with one another.

The flute 62A forms a generally planar and rectangular bottom wall 76A that is located approximately midway between the front wall 70A and the front wall 70B. The bottom wall 76A includes a bottom edge 79A located at the front wall 30 of the mounting base 28 and includes a linear top edge 78A that extends from the top end wall 68A to the top end wall 68B and that forms a portion of the serrated scraping edge 56. The flute 62A also forms a generally planar first side wall 80 that forms a portion of the ridge 64A and that extends from the front wall 70A to the bottom wall 76A. The first side wall 80 extends from a bottom edge at the bottom end wall 66A to a linear top edge 82 that forms a portion of the serrated scraping edge 56. The flute 62A also forms a generally planar second side wall 84 that forms a portion of the ridge 64B. The second side wall 84 extends from the front wall 70B to the bottom wall 76A and extends from a bottom edge at the bottom end wall 66B to a linear top edge 86 at the top end wall 68B. The top edge 86 forms a portion of the serrated scraping edge 56.

The flute 62B forms a generally planar first side wall 94 that forms a portion of the ridge 64B and that extends from the front wall 70B to the bottom wall 76B. The first side wall 94 includes a bottom edge at the bottom end wall 66B and a linear top edge 96 at the top end wall 68B that forms a portion of the serrated scraping edge 56. The flute 62B also forms a generally planar second side wall 98 that forms a portion of the ridge 64C and that extends from the bottom end wall 66C to a linear top edge 100 located at the top end wall 68C. The top edge 100 forms a portion of the serrated scraping edge 56.

The bottom wall 76A and the bottom wall 76B are generally coplanar and parallel with one another. The top edges 74A-C of the front walls 70A-C are generally coaxial to one another. The top edges 78A and 78B of the bottom walls 76A and B are generally coaxial with one another and are generally parallel to the top edges 74A-C of the front walls 70A-C. The bottom walls 76A and B slope downwardly and inwardly from the top edges 78A and B to the bottom edges 79A and B in a direction toward the front wall 30 of the mounting base 28. The front walls 70A-C slope downwardly and outwardly from the top edges 74A-C of the front walls 70A-C to the bottom edge of each front wall 70A-C in a direction away from the front wall 30 of the mounting base 28. The depth of each flute 62A and B increases as each flute 62A and B extends from the top end walls 68A-C toward the bottom end walls 66A-C. Alternatively, the depth of each flute 62A-B may remain approximately constant, or may decrease, as each flute 62A-B extends from the top end walls 68A-C toward the bottom end walls 66A-C.

The scraping tip 44 also includes a rear wall 108 that is generally coplanar with the rear wall 32 and that extends from the rear wall 32 of the mounting base 28 to a generally linear top edge 110. A generally rectangular and planar wall 112 extends from the top edge 110 to a generally parallel and spaced apart linear edge 114. The edge 114 adjoins the top end walls 68A-C and includes the top edges 78A and B of the bottom walls 76A and B.

In operation, the scraper blade 20 is adapted to be biased into scraping engagement with the outer surface 22 of the conveyor belt 24 such that the planar top end walls 68A-C of the ridges 64A-C engage the outer surface 22 of the conveyor belt 24 and are located generally parallel to the outer surface 22. The serrated scraping edge 56 is formed in a generally serrated or saw-tooth arrangement, but is located generally coplanar with the top end walls 68A-C of the ridges 64A-C such that the entire length of the serrated scraping edge 56 is in scraping engagement with the outer surface 22 of the conveyor belt 24. The bottom walls 76A-B are adapted to be located at an obtuse angle to the outer surface 22 of the conveyor belt 24. The front walls 70A-C of the ridges 64A-C are adapted to be located at an acute angle relative to the outer surface 22 of the conveyor belt 24 to assist in pivoting the scraper blade 20 away from the conveyor belt 24 when an obstruction on the conveyor belt 24 is encountered.

As shown in Figure 1, the front walls 70A-C, bottom walls 76A-B, and the side walls 80, 84, 94 and 98 are all generally planar, however, these walls may be curved or rounded such that the flutes 62A-B and ridges 64A-C are curved or rounded rather than polygonal. Similarly, the serrated scraping edge 56 may include curved or rounded apexes and nadirs such that the scraping edge 56 is generally formed as a sinusoidal curve. The width and depth of the flutes 62A-B may also be varied. The scraper blade 20 may be made from an elastomeric material such as urethane, and may include wear-resistant inserts for scraping engagement with the conveyor belt 24 that are made from metal or ceramic material.

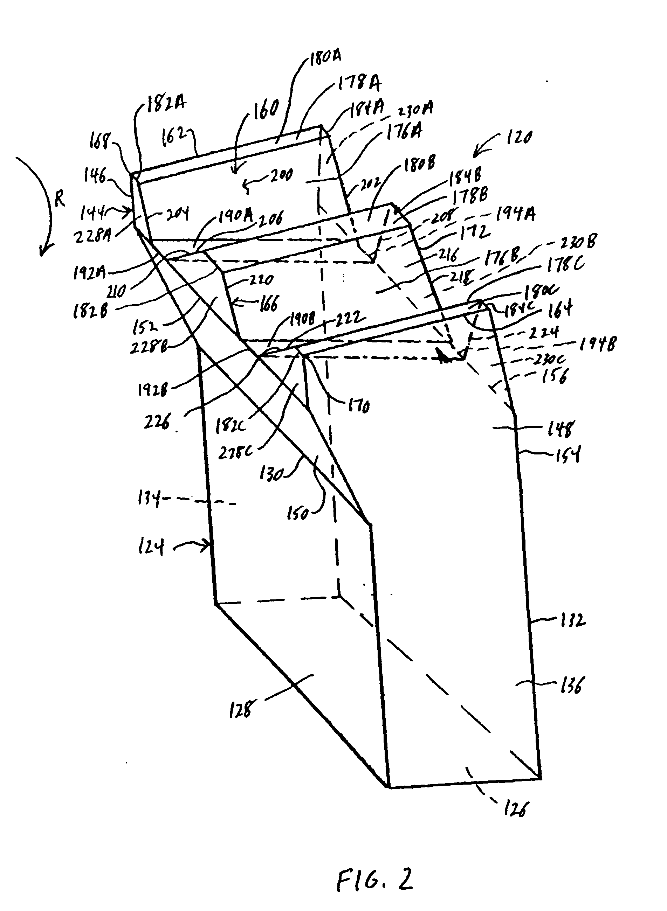

Another embodiment of the scraper blade of the present invention is shown in Figure 2 and is identified with the reference number 120. The scraper blade 120 is adapted to be removably connected to a selectively moveable cross shaft of a primary type conveyor belt cleaner (not shown) such that the scraper blade 120 may be biased into scraping engagement with a curved portion of the outer surface 22 of the conveyor belt 24 that extends around the head pulley of the conveyor. The direction of rotation of the conveyor belt 24 with respect to the scraper blade 120 is shown in Figure 2 by the arrow R.

The scraper blade 120 includes a generally rectangular mounting base 124. The mounting base 124 includes a generally planar and rectangular bottom wall 126 and a generally rectangular and planar front wall 128 that extends from the bottom wall 126 upwardly to a generally linear top edge 130. The mounting base 124 also includes a generally planar rear wall 132 spaced apart from and generally parallel to the front wall 128. A generally planar first side wall 134 extends between a first side edge of the front wall 128 and a first side edge of the rear wall 132 and a generally planar second side wall 136 extends between a second side edge of the front wall 128 and a second side edge of the rear wall 132. The second side wall 136 is spaced apart from and generally parallel to the first side wall 134. The mounting base 124 may include one or more bores or other mounting mechanisms adapted to removably attach the mounting base 124 to the cross shaft of the conveyor belt cleaner.

The scraper blade 120 also includes a scraping tip 144 attached to and extending outwardly from the top end of the mounting base 124. The scraping tip 144 includes a generally planar first end wall 146 that is generally coplanar with and that extends from the first side wall 134 of the mounting base 124. The scraping tip 144 also includes a generally planar second end wall 148 that is generally coplanar with and that extends from the second side wall 136 of the mounting base 124. The scraping tip 144 also includes a generally planar and rectangular wall 150 that extends from the top edge 130 of the front wall 128 of the mounting base 124 to a generally linear edge 152 that is generally parallel to the edge 130. The wall 150 slopes upwardly and outwardly from the front wall 128 of the mounting base 124. The scraping tip 144 also includes a generally planar rear wall 154 that is generally coplanar with and that extends from the rear wall 132 of the mounting base 124 to a generally linear top edge 156.

The scraping tip 144 also includes a scraping surface 160 that extends from a generally linear first edge 162 located at the first end wall 146 to a generally linear second edge 164 located at the second end wall 148. The scraping surface 160 includes a nonlinear scraping edge 166 that extends from a first end 168 to a second end 170. The scraping edge 166 preferably has a generally serrated configuration. The scraping surface 160 extends from the serrated scraping edge 166 at one end of the scraping surface 160 to a serrated rear edge 172 at a second end of the scraping surface 160. A portion of the top edge 152 of the wall 150 forms a portion of the serrated scraping edge 166, and a portion of the top edge 156 of the rear wall 154 forms a portion of the serrated rear edge 172.

The scraping surface 160 includes a plurality of elongate and generally linearly extending grooves or flutes 176A and 176B. The flutes 176A and B form a plurality of ridges 178A-C. The flutes 176A and B each form a respective valley between the adjacent ridges 178A-C. The scraping surface 160 thereby has a generally corrugated configuration. Each ridge 178A-C includes an apex formed by a generally planar and rectangular top wall 180A-C. Each top wall 180A-C respectively includes a generally linear front edge 182A-C and a generally linear rear edge 184A-C. The linear front edges 182A-C are aligned generally coaxial with one another and the linear rear edges 184A-C are aligned generally coaxial with one another. The front edges 182A-C form a portion of the serrated scraping edge 166. The rear edges 184A-C form a portion of the rear edge 172 of the scraping surface 160. The top walls 180A-C are generally coplanar with respect to one another and are generally parallel to one another.

The flute 176A forms a generally planar and rectangular bottom wall 190A and the flute 176B forms a generally planar and rectangular bottom wall 190B. The bottom wall 190A includes a linear front edge 192A and a linear rear edge 194A. The bottom wall 190B includes a linear front edge 192B and a linear rear edge 194B. The front edges 192A and B form a portion of the edge 152 of the wall 150 and a portion of the serrated scraping edge 166. The rear edges 194A and B form a portion of the top edge 156 of the rear wall 154 and a portion of the serrated rear edge 172. The bottom walls 190A and B are generally coplanar with one another and are generally parallel to one another.

The flute 176A forms a first side wall 200 that forms a part of the ridge 178A and that extends from the top wall 180A to the bottom wall 190A. The first side wall 200 extends from a rear edge 202 to a linear front edge 204. The flute 176A also forms a second side wall 206 that forms a portion of the ridge 178B and that extends from the top wall 180B to the bottom wall 190B. The second side wall 206 extends from a rear edge 208 to a linear front edge 210.

The flute 176B forms a first side wall 216 that forms a portion of the ridge 178B and that extends from the top wall 180B to the bottom wall 190B. The first side wall 216 extends from a rear edge 218 to a linear front edge 220. The flute 176B also forms a second side wall 222 that forms a portion of the ridge 178C and that extends from the top wall 180C to the bottom wall 190B. The second side wall 222 extends from a rear edge 224 to a linear front edge 226.

The front edges 182A-C, 192A-B, 204, 210, 220 and 226 form the serrated scraping edge 166 and are all generally linear and are all located in the same plane with respect to one another. Thus although the scraping edge 166 is serrated or saw-toothed in configuration, the scraping edge 166 is located in one plane. The rear edges 184A-C, 194A-B, 202, 208, 218 and 224 are also all generally linear and are also all located in a common plane.

The ridge 178A includes a generally planar front end wall 228A that extends from the edge 152 of the wall 150 to the top wall 180A and that extends from the first end wall 146 to the front edge 204 of the first side wall 200. The ridge 178A also includes a generally planar rear end wall 230A that extends from the top edge 156 of the rear wall 154 to the top wall 180A and that extends between the first end wall 146 and the rear edge 202 of the first side wall 200.

The ridge 178B includes a generally planar front end wall 228B that extends from the top edge 152 of the wall 150 to the top wall 180B and that extends between the front edge 210 of the second side wall 206 and the front edge 220 of the first side wall 216. The ridge 178B also includes a generally planar rear end wall 230B that extends from the top edge 156 of the rear wall 154 to the top wall 180B and that extends from the rear edge 208 of the second side wall 206 to the rear edge 218 of the first side wall 216.

The ridge 178C includes a generally planar front end wall 228C that extends from the top edge 152 of the wall 150 to the top wall 180C and that extends from the front edge 226 of the second side wall 222 and to the second end wall 148. The ridge 178C also includes a generally planar rear end wall 230C that extends from the top edge 156 of the rear wall 154 to the top wall 180C and that extends from the rear edge 224 of the second side wall 222 to the second end wall 148.

The front end walls 228A-C are aligned generally coplanar with one another and the rear end walls 230A-C are aligned generally coplanar with one another. The rear end walls 230A-C are located at an angle to the rear wall 154 such that the rear end walls 230A-C extend upwardly and forwardly toward the front end walls 228A-C.

The depth of the flutes 176A-B respectively from the top walls 180A-C to the bottom walls 190A-B increases as the flutes 176A-B extend from the serrated scraping edge 166 to the rear edge 172. The bottom walls 190A-B slope downwardly and away from the front edges 192A and B to the rear edges 194A and B in a direction toward the mounting base 124. The top walls 180A-C slope upwardly and away from the front edges 182A-C to the rear edges 184A-C in a direction away from the mounting base 124. The bottom walls 190A-B are adapted to be located at an obtuse angle to the outer surface 22 of the conveyor belt 24 and the top walls 180A-C are adapted to be located at an acute angle to the outer surface 22 of the conveyor belt 24. Alternatively, the depth of each flute 176A-B may remain approximately constant, or may decrease, as each flute 176A-B extends from the serrated scraping edge 166 to the rear edge 172.

As shown in Figure 2, the scraping surface 160 includes a plurality of generally planar segments such that the scraping surface has an undulating generally polygonal configuration. However, the scraping surface 160 may be formed from a plurality of curved segments. Similarly, the serrated scraping edge 166 may be formed from a plurality of curved or rounded edges such as in a sinusoidal curve. The scraper blade 120 may be formed from an elastomeric material such as urethane and may include wear-resistant scraping elements that may be formed from metal or ceramic materials.

In operation, the front end walls 228A-C of the ridges 178A-C are adapted to be pivotally biased into scraping engagement with the outer surface 22 of the scraper blade 20 such that the serrated scraping edge 166 is in engagement with the conveyor belt 24. The scraping surface 160 thereby faces the oncoming conveyor belt and any conveyed material that remains adhered to the belt. Although the front end walls 228A-C are generally planar and the serrated scraping edge 166 is located in a plane, the front end walls 228A-C and the serrated scraping edge 166 may be formed to conform to a generally cylindrical curve in order to mate with the curved outer surface 22 of the conveyor belt 24 at the head pulley.

Various features of the invention have been particularly shown and described in connection with the illustrated embodiments of the invention, however, it must be understood that these particular arrangements merely illustrate, and that the invention is to be given its fullest interpretation within the terms of the appended claims.

## Claims

1. A scraper blade for a conveyor belt cleaner including:
a scraping tip having a scraping surface extending from a first side edge to a second side edge and extending from a first end to a second end, said first end of said scraping surface including a scraping edge having a first end at said first side edge and a second end at said second side edge, said scraping edge extending nonlinearly between said first end and said second end.

2. A scraper blade for a conveyor belt cleaner including:
a scraping tip having a scraping surface extending from a first side edge to a second side edge and extending from a first end to a second end, said first end of said scraping surface including a scraping edge, said scraping surface including one or more ridges and one or more flutes, each said flute being located adjacent to a respective ridge.

3. The scraper blade of claim 1 or claim 2 including a mounting base attached to said scraping tip.

4. The scraper blade of any preceding claim wherein said scraping edge has a generally serrated configuration, or includes one or more generally linear segments, or has a generally sinusoidal wave configuration, or has a generally square-wave configuration.

5. The scraper blade according to any preceding claim wherein said scraping surface includes one or more flutes extending from said scraping edge toward said second end of said scraping surface.

6. The scraper blade of claim 5 wherein said scraping surface includes one or more elongate ridges extending from said scraping edge toward said second end of said scraping surface, each said flute being located adjacent a respective ridge.

7. The scraper blade of claim 6 wherein each said ridge includes an elongate front wall and each said flute includes an elongate bottom wall, the front walls and bottom walls preferably being planar.

8. The scraper blade of claim 7 wherein said bottom walls are disposed at an angle to said front walls such that said flutes increase in depth as said flutes extend from said scraping edge toward said second end of said scraping surface.

9. The scraper blade of claim 1 or claim 2 wherein said second end of said scraping surface of said scraping tip includes a serrated edge extending between said first side edge and said second side edge of said scraping surface.

10. The scraper blade of claim 2 wherein each said ridge extends from said scraping edge toward said second end of said scraping surface.

11. The scraper blade of claim 2 or claim 10 including one or more end walls, each said end wall adjoining said scraping edge at a respective ridge, said end walls adapted to engage a conveyor belt.

12. The scraper blade of any of claims 2,10 or 11 wherein said scraping surface has a generally corrugated configuration and/or wherein said scraping surface includes a plurality of generally planar walls.
